# NEUE EUROPÄISCHE PATENTSCHRIFT

(11) **EP 0 922 896 B2**
(45) Veröffentlichungstag und Bekanntmachung des Hinweises auf die Entscheidung über den Einspruch: **03.08.2011**
(45) Hinweis auf die Patenterteilung: 25.08.2004
(21) Anmeldenummer: 98119913.6
(22) Anmeldetag: 21.10.1998
(51) Int. Cl.: F16L 13/14

(54) **Unlösbare Pressverbindungen zwischen einem Fitting und einem Metallrohrende**
Non-disconnectable crimped connection between a fitting and metal pipe end
Connexion sertie indémontable entre un élément de tuyauterie et le bout d'un tuyau en métal

(30) Priorität: 10.12.1997 DE 29721760 U
(43) Veröffentlichungstag der Anmeldung: 16.06.1999
(73) Patentinhaber: VIEGA GmbH & Co. KG, 57439 Attendorn (DE)
(72) Erfinder: Viegener, Walter, 57439 Attendorn (DE)
(74) Vertreter: Cohausz & Florack

(56) Entgegenhaltungen:
- EP-A2- 0 797 037
- WO-A-97/31215
- CH-A- 521 538
- DE-C- 19 631 574
- US-A- 2 225 208
- US-A- 4 018 462
- US-A- 4 850 096
- US-A- 4 880 260
- US-A- 5 695 224
- PATENT ABSTRACTS OF JAPAN vol. 005, no. 053 (M-063), 14. April 1981 & JP 56 009025 A (HITACHI METALS LTD;OTHERS: 01), 29. Januar 1981
- PATENT ABSTRACTS OF JAPAN vol. 005, no. 053 (M-063), 14. April 1981 & JP 56 009026 A (HITACHI METALS LTD;OTHERS: 01), 29. Januar 1981
- PATENT ABSTRACTS OF JAPAN vol. 005, no. 053 (M-063), 14. April 1981 & JP 56 009027 A (HITACHI METALS LTD;OTHERS: 01), 29. Januar 1981
- PATENT ABSTRACTS OF JAPAN vol. 004, no. 132 (M-032), 17. September 1980 & JP 55 088939 A (NIPPON BENKAN KOGYO KK), 5. Juli 1980

## Beschreibung

Die Erfindung bezieht sich auf eine unlösbare, durch Kaltverformung gebildete Pressverbindung nach dem Oberbegriff des Anspruches 1.

Die Pressverbindung zwischen der Muffe des Fittings und dem Metallrohrende wird bei Metallrohren bis zu einem Innendurchmesser von 54 mm mit einem elektrohydraulischen Presswerkzeug vorgenommen, das mit einer Pressbacke ausgerüstet ist, die zwei ein Pressmaul bildende Pressbackenhälften aufweist, die drehbar an quer zur Längsachse der Pressbacke sich erstreckenden Brückenteilen gelagert sind. Die Pressbackenhälften umgreifen die Muffe des Fittings im Bereich der den Dichtungsring aufnehmenden Sicke und zu beiden Seiten der Sicke. Zur Erzielung einer unlösbaren Verbindung wird ein Pressdruck unmittelbar vor, auf und hinter der Sicke ausgeübt. Durch die Kaltverformung der Sicke wird der Dichtring auf das Metallrohrende gepresst, während vor und hinter der Sicke auf dem Umfang verteilte, beabstandete Einprägungen vorgenommen werden, in deren Bereich auch das Metallrohrende plastisch verformt wird.

Bei größeren Metallrohrdurchmessem können die Kaltverformungen des Fittings und des eingesteckten Metallrohrendes nicht mit einer Pressbacke vorgenommen werden, die unmittelbar mit ihren Pressbackenhälften auf den Fitting aufgesetzt wird.

Um Rohre mit einem Innendurchmesser von 70, 80 oder 100 mm durch Kaltverformung unlösbar mit einem Fitting zu verbinden, sind große, unhandliche Werkzeuge bekannt, die elektrohydraulisch arbeiten und mit einer Pressschlinge ausgerüstet sind, die nach dem Einstecken des Metallrohrendes in eine Muffe eines Fittings um diese Muffe gelegt wird. Mittels dieser Pressschlinge wird eine nach innen offene, einen Dichtring aufnehmende Sicke und der Bereich der Muffe benachbart der Sicke zusammen mit dem in diesem Bereich liegenden Rohrteil dreieckförmig verformt, wobei die Dreiecksseiten bogenförmig verlaufen und die Ecken abgerundet sind.

Es ist ferner bekannt, die Fittings mit glatten Enden zu versehen und die Verbindung eines Fittingendes mit einem Metallrohrende durch eine Muffe herzustellen, in die das Fittingende und das Metallrohrende eingeführt werden. Die Muffe ist in Längsrichtung geschlitzt. Die Schlitzbreite kann durch Klemmschrauben verringert werden, sodass mittels dieser Schrauben die Muffe auf die Enden des Fittings und des Metallrohrendes gepresst wird. In diese Muffe ist eine Dichtung eingelegt, die die genannten Enden umgreift.

Die US 4 850 096 offenbart eine Verbindung zweier Rohrenden, die in einer ineinandergesteckten Position miteinander verpresst werden. Dabei wird eine ringförmige Dichtung zusammen mit einem Halteelement in dem Spalt zwischen den Rohren angeordnet, damit eine abgedichtete Verbindung durch das Verpressen hergestellt werden kann.

Der Erfindung liegt die Aufgabe zugrunde, einen Fitting zur unlösbaren Kaltverbindung mit einem Metallrohr, dessen Innendurchmesser größer ist als 54 mm so zu gestalten, dass ein runder oder annähernd runder Querschnitt der Muffe auch im gepressten Endzustand vorhanden ist und die Dichtungs- und Haltekräfte auf dem gesamten Umfang gleich oder annähernd gleich sind.

Diese Aufgabe wird erfindungsgemäß mit einer Pressverbindung mit den Merkmalen des Anspruches 1 gelöst. Dabei ist an der Muffe mindestens ein Halteelement festgelegt, das zusammen mit der Muffe kalt verformt wird, sich teilweise in das Material des Metallrohres eingräbt und einen Formschluss mit dem Metallrohr bildet. Erfindungsgemäß ist benachbart der Verankerungsnut für den Dichtungsring eine zum Innenraum geöffnete, ringförmige Aufnahmenut für das Halteelement vorgesehen, das mit auf dem Umfang verteilt angeordneten, in Richtung auf das Metallrohrende sich erstreckenden Vorsprüngen ausgerüstet ist. Die Vorsprünge bilden nach der Kaltverformung der Muffe des Fittings einen Formschluss zwischen dem Halteelement bzw. den Halteelementen und dem Metallrohrende.

Das Halteelement oder die Halteelemente weisen eine Härte auf, die größer ist als die des Metallrohres.

Bei der erfindungsgemäßen Pressverbindung wird der Formschluss zwischen dem in die Muffe des Fittings eingelegten Halteelement bzw. den Halteelementen und dem Metallrohr durch die Vorsprünge der Halteelemente erreicht, die sich in das Material des Metallrohrendes bei der Pressverformung eingraben.

Weitere Merkmale der Erfindung ergeben sich aus den Unteransprüchen.

Ausführungsformen der erfindungsgemäßen Pressverbindung sind in den Zeichnungen dargestellt und werden im folgenden beschrieben. Es zeigen:
- Figur 1: einen Fitting mit zugeordneten Metallrohr im Längsschnitt,
- Figur 2: die Ausführung nach der Fig. 1 mit einem in die Muffe des Fittings eingeführten Metallrohrende und mit einem auf die Muffe aufgesetzten Presswerkzeug im Längsschnitt,
- Figur 3: die unlösbare Pressverbindung zwischen dem Fitting und dem Metallrohrende bei der Ausführung nach den Fig. 1 und 2,
- Fig. 4, 5 und 6: in vergrößertem Maßstab die einzelnen Verfahrensschritte zur Erstellung der unlösbaren Pressverbindung zwischen dem Fitting und dem Metallrohr,
- Figur 7: ein weiteres Ausführungsbeispiel des Halteelements und der zugeordneten Aufnahmenut in der Muffe des Fittings.

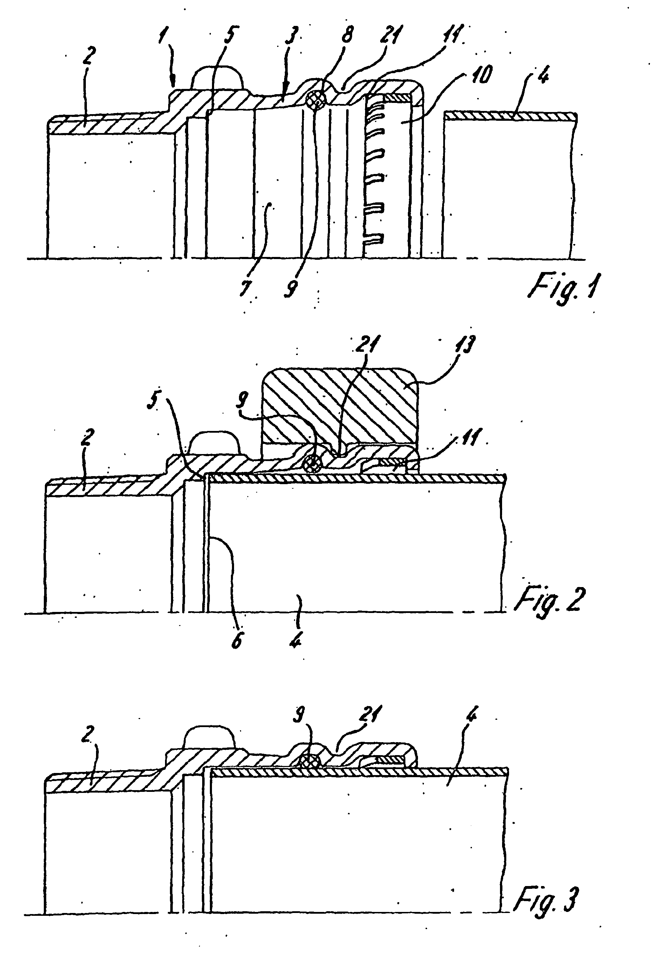

Das in der Fig. 1 dargestellte Fitting 1 weist einen mit einem Außengewinde versehenen Stutzen 2 und eine Muffe 3 auf, in die ein Metallrohrende 4 eingeschoben wird, deren Innendurchmesser dem Außendurchmesser des Metallrohrendes 4 entspricht und die eine ringförmige Anschlagfläche 5 für die Stirnfläche 6 des Metallrohrendes aufweist.

Die Muffe 3 ist mit einer zum Innenraum 7 geöffneten Verankerungsnut 8 für ein Dichtelement 9 versehen, der beim Pressvorgang, wie in der Fig. 3 dargestellt, kraftschlüssig mit dem Metallrohrende 4 verbunden wird, sodass Flüssigkeit, die das Metallrohr 4 durchfließt, von dem Halteelement 10 ferngehalten wird, das in einer Aufnahmenut 11 der Muffe 3 angeordnet und ringförmig ausgebildet ist. Der Dichtungsring 9 wird in den dargestellten Ausführungsbeispielen durch einen O-Ring gebildet.

Es ist jedoch auch denkbar, den Dichtungsring als Lippendichtung oder als ringförmiges angepasstes Formteil auszubilden. Das Dichtelement weist einen verhältnismäßig kleinen Querschnitt auf.

Das Halteelement 10 ist in der Aufnahmenut 11 formschlüssig montiert oder federnd eingebaut. Durch den federnden Einbau können Toleranzabweichungen zwischen den zusammenwirkenden Funktionsteilen ausgeglichen werden.

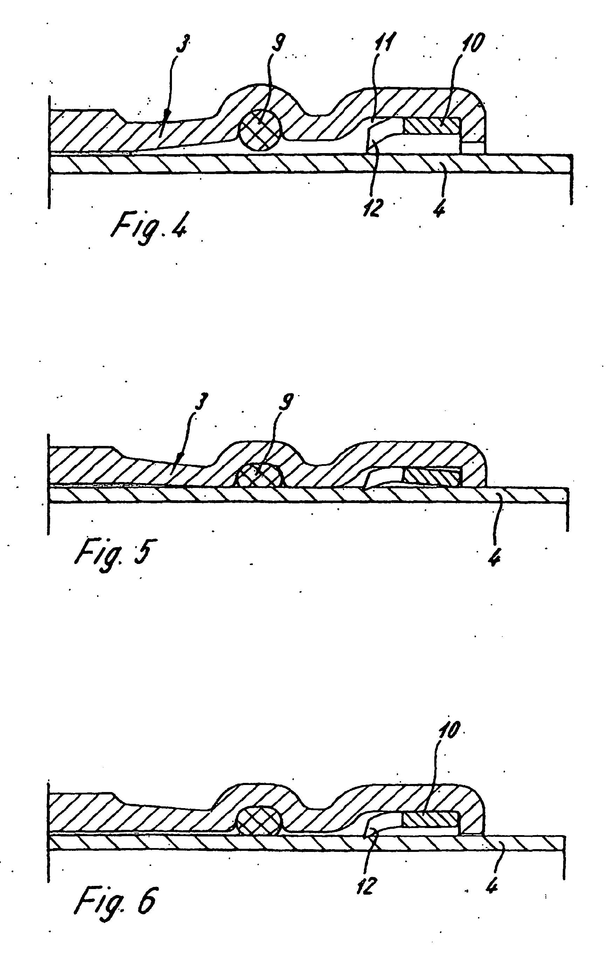

Das Halteelement, das ringförmig ausgebildet ist, ist in Längsrichtung geschlitzt und weist Vorsprünge 12 auf, wobei die Vorsprünge 12 sich in Richtung des Metallrohrendes 4 erstrecken und bei der radialen Verpressung der Muffe 3, wie dies in der Fig. 3 und in der Fig. 5 dargestellt ist, in das Material des Metallrohrendes eindringen und das Halteelement 10 gegenüber dem Metallrohrende 4 und damit auch die Muffe 3 des Fittings 1 gegenüber dem Metallrohrende 4 formschlüssig festlegen.

In der Fig. 4 ist der Montageschritt in vergrößertem Maßstab dargestellt, bei dem das Metallrohrende 4 in die Muffe 3 des Fittings eingeführt wird.

Die Fig. 5 zeigt die radiale Verpressung der Muffe 3 mit dem Metallrohrende 4 unter Verwendung eines Presswerkzeuges, von dem ein Teil 13 in der Fig. 2 dargestellt ist.

Die Fig. 5 zeigt das Ende des Pressvorganges, bei dem das Presswerkzeug noch nicht von dem Fitting entfernt wurde.

Nach der Entfernung des Presswerkzeuges findet eine geringe Zurückfederung der Fittingteile statt, die im Wesentlichen kalt verformt sind. Auch bei dieser geringfügigen Rückfederung bleibt die Spitze 12 des Halteelements 10 in das Material des Metallrohres 4 eingegraben.

Dieser Endzustand der Pressverbindung ist in der Fig. aufgezeigt.

Anstelle eines Halteelements ist es auch möglich, mehrere Halteelemente in der Aufnahmenut 11 vorzusehen.

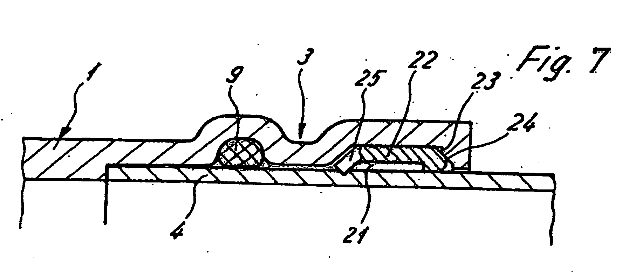

In Fig. 7 ist eine weitere Ausführungsform des Halteelements dargestellt, das in einer zum Metallrohrende 4 geöffneten Aufnahmenut 11 der Muffe 3 des Fittings 1 angeordnet ist.

Die Muffe 3 des Fittings kann an der Außenseite mit einer umlaufenden Rille 21 (Fig. 2), mit Nocken, mit Rippen oder umlaufenden Stegen zur Arretierung des Presswerkzeuges, vorzugsweise einer Presskette 13 des Presswerkzeuges versehen sein.

Durch die radiale Verpressung der Muffe 3 des Fittings 1 mit dem eingesteckten Metallrohrende 4, z.B. unter Verwendung einer Presskette, wird ein runder Querschnitt der Muffe 3 bzw. ein annähernd runder Querschnitt aufrechterhalten und es wird durch die besondere Ausbildung und Anordnung des oder der Halteelemente erreicht, dass die Haltekräfte umlaufend gleich oder annähernd gleich sind. Das Gleiche gilt für die Dichtkräfte, die sich durch die radiale Verformung der Verankerungsnut beim Pressvorgang zwischen dem Dichtelement 9 und dem Metallrohrende einstellen.

Bei dem Ausführungsbeispiel nach der Fig. 7 ist in der Aufnahmenut 21 der Muffe 3 ein ringförmiges, in Längsrichtung geschlitztes Halteelement 22 angeordnet, das an der dem Dichtungsring 9 abgewandten Seite mit einer kegelförmigen Fläche 23 versehen ist. Diese Fläche 23 wirkt mit einer kegelförmigen Fläche 24 der Muffe des Fittings zusammen, sodass beim Verpressen der Muffe mit dem Metallrohrende 4 die an der dem Dichtungsring 9 zugewandten Seite des Halteelements vorgesehenen Vorsprünge 25 in Form von Zähnen o. dgl. in das Material des Metallrohrendes 4 eingegraben werden.

Das Halteelement oder die Halteelemente weisen eine Härte auf, die größer ist als die des Metallrohres.

Das Halteelement oder die Halteelemente werden vorzugsweise aus Edelstahl gefertigt.

In den zeichnerisch dargestellten Ausführungsbeispielen ist das Halteelement oder sind die Halteelemente zwischen dem Dichtungsring 9 und dem freien Ende des Fittings angeordnet bzw. ausgebildet.

Hierdurch wird gesichert, dass die Halteelemente nicht mit der Flüssigkeit beaufschlagt werden, die unter Druck durch das Metallrohr gefördert wird.

Es ist auch denkbar, die Halteelemente, die in den Fig. 1 bis 7 aufgezeigt sind, in dem Bereich zwischen der Stützfläche und dem Dichtungsring 9 vorzusehen. Hierbei muss darauf geachtet werden, dass das Halteelement bzw. dass die Halteelemente gegenüber der Flüssigkeit, die durch die Rohrleitung transportiert wird, korrosionsbeständig sind.

### Bezugszeichenliste

- 1: Fitting
- 2: Muffe
- 3: Stutzen
- 4: Metallrohr
- 5: Anschlagfläche
- 6: Stirnfläche
- 7: Innenraum
- 8: Verankerungsnut
- 9: Dichtungsring
- 10: Halteelement
- 11: Aufnahmenut
- 12: Vorsprung
- 13: Teil
- 21: Rille
- 22: Halteelement
- 23: Fläche
- 24: Fläche
- 25: Vorsprung

## Patentansprüche

1. Unlösbare, durch Kaltverformung gebildete Pressverbindung zwischen einem Fitting und einem in eine Muffe (3) des Fittings (1) eingeführten Metallrohrende (4), wobei die Muffe (3) eine zum Innenraum geöffnete, ringförmige Verankerungsnut für einen Dichtungsring (9) aufweist, und an der Muffe (3) mindestens ein Halteelement (10) festgelegt ist, das zusammen mit der Muffe (3) kalt verformt wird und sich teilweise in das Material des Metallrohrendes (4) eingräbt und einen Formschluss mit dem Metallrohr bildet,
**dadurch gekennzeichnet,**
- **dass** das Halteelement (10) ringförmig ausgebildet ist, in Längsrichtung geschlitzt ist und Vorsprünge (12) aufweist, die sich in Richtung des Endes des Metallrohrendes (4) erstrecken, bei der radialen Verpressung der Muffe (3) in das Material des Metallrohrendes (4) eindringen und über den Umfang des Halteelements verteilt angeordnet sind und
- dass benachbart der Verankerungsnut (8) für den Dichtungsring (9) eine zum Innenraum geöffnete ringförmige Aufnahmenut für mindestens ein Halteelement (10) vorgesehen ist.

2. Pressverbindung nach Anspruch 1,
**dadurch gekennzeichnet,**
**dass** bei einem geringfügigen Rückfedern die Spitze des Halteelementes (10) in das Material des Metallrohrendes (4) eingegraben bleibt.

3. Pressverbindung nach Anspruch 1,
**dadurch gekennzeichnet,**
**dass** das ringförmige Halteelement(10) im Querschnitt gebogen ist.

4. Preßverbindung nach einem der Ansprüche 1 bis 3,
**dadurch gekennzeichnet,**
**daß** das Halteelement in der Aufnahmenut (11) formschlüssig montiert oder federnd eingebaut ist.

5. Preßverbindung nach Anspruch 1,
**dadurch gekennzeichnet,**
**daß** das Halteelement oder die Halteelemente zwischen dem Dichtungsring (9) und dem freien Ende des Fittings (1) angeordnet ist bzw. sind.

6. Preßverbindung nach einem der vorhergehenden Ansprüche
**dadurch gekennzeichnet,**
**daß** die Muffe (3) des Fittings (1) an der Außenseite mit einer umlaufenden Rille (21), mit Nocken, Rippen oder umlaufenden Stegen zur Arretierung des Preßwerkzeuges, vorzugsweise einer Preßkette des Preßwerkzeuges versehen ist.

7. Preßverbindung nach einem der vorhergehenden Ansprüche,
**dadurch gekennzeichnet,**
**daß** die Muffe (3) des Fittings (1) nach der Verpressung rund oder annähernd rund ist und die Dicht- und Haltekräfte zwischen der Muffe (3) und dem Metalirohrende (4) gleichmäßig oder nahezu gleichmäßig auf dem Metallrohrumfang verteilt sind.

8. Preßverbindung nach Anspruch 2,
**dadurch gekennzeichnet,**
**daß** ein ringförmiges Halteelement (22) an der dem Dichtungsring (9) zugewandten Seite mit sich bei der Kaltverformung in das Material des Metallrohres eingrabenden Vorsprüngen (25), z.B. Zähnen, ausgerüstet ist und an der anderen Stirnseite eine kegelförmige Fläche (23) aufweist, die mit einer kegelförmigen Fläche (24) des Fittings zusammenwirkt.

9. Preßverbindung nach einem der vorhergehenden Ansprüche,
**dadurch gekennzeichnet,**
**daß** das Halteelement oder die Halteelemente eine Härte aufweisen, die größer ist als die des Metallrohres.

10. Preßverbindung nach Anspruch 10,
**dadurch gekennzeichnet,**
**daß** das Halteelement oder die Halteelemente aus Edelstahl gefertigt sind.

11. Preßverbindung nach Anspruch 1,
**dadurch gekennzeichnet,**
**daß** der Dichtungs ring (9) als Lippendichtung, als 0-Ring oder als angepaßtes Formteil ausgebildet ist.

12. Preßverbindung nach Anspruch 11,
**dadurch gekennzeichnet,**
**daß** der Dichtungsring (9) einen verhältnismäßig kleinen Querschnitt aufweist.

## Claims

1. Non-disconnectable crimped connection, formed by cold-forming, between a fitting and a metal pipe end (4) inserted into a socket (3) of the fitting (1), wherein the socket (3) has an annular anchoring groove, open towards the interior space, for a sealing ring (9), and at least one retaining element (10) is secured to the socket (3), which retaining element (10) is cold-formed together with the socket (3) and partially digs into the material of the metal pipe end (4) and forms a positive connection with the metal pipe,
**characterised in that**
- the retaining element (10) is annular, is slotted in the longitudinal direction and has projections (12), which extend in the direction of the end of the metal pipe end (4), penetrate into the material of the metal pipe end (4) during the radial crimping of the socket (3) and are arranged distributed over the circumference of the retaining element (10) and
- adjacent to the anchoring groove (8) for the sealing ring (9) an annular receiving groove, open towards the interior space, for at least one retaining element (10) is provided.

2. Crimped connection according to Claim 1, **characterised in that** the tip of the retaining element (10) remains dug into the material of the metal pipe end (4) during a slight elastic recovery.

3. Crimped connection according to Claim 1, **characterised in that** the annular retaining element (10) is bent in cross section.

4. Crimped connection according to one of Claims 1 to 3, **characterised in that** the retaining element is fitted positively or installed resiliently in the receiving groove (11).

5. Crimped connection according to Claim 1, **characterised in that** the retaining element or the retaining elements is or are arranged between the sealing ring (9) and the free end of the fitting (1).

6. Crimped connection according to one of the preceding claims, **characterised in that** the socket (3) of the fitting (1) is provided on the outer side with a circumferential flute (21), with lugs, ribs or encircling webs for locking the crimping tool, preferably a crimping chain of the crimping tool.

7. Crimped connection according to one of the preceding claims, **characterised in that** the socket (3) of the fitting (1) is round or approximately round after the crimping and the sealing and retaining forces between the socket (3) and the metal pipe end (4) are distributed uniformly or nearly uniformly over the metal pipe circumference.

8. Crimped connection according to Claim 2, **characterised in that** an annular retaining element (22) on the side facing the sealing ring (9) is equipped with projections (25), e.g. teeth, which dig into the material of the metal pipe during cold-forming and on the other front side has a conical surface (23), which cooperates with a conical surface (24) of the fitting.

9. Crimped connection according to one of the preceding claims, **characterised in that** the retaining element or the retaining elements have a hardness that is greater than that of the metal pipe.

10. Crimped connection according to Claim 10 [*sic*], **characterised in that** the retaining element or the retaining elements are produced from high-grade steel.

11. Crimped connection according to Claim 1, **characterised in that** the sealing ring (9) is designed as a lip seal, as an 0-ring or as an adapted shaped part.

12. Crimped connection according to Claim 11, **characterised in that** the sealing ring (9) has a relatively small cross section.

## Revendications

1. Raccord serti, indémontable entre un élément de tuyauterie et le bout d'un tuyau en métal, qui est introduit dans un manchon (3) de l'élément de tuyauterie (1), sachant que le manchon (3) est doté d'une rainure d'ancrage en forme d'anneau, ouverte vers l'espace intérieur, prévue pour une bague d'étanchéité (9), et qu'audit manchon (3) est fixé au moins un élément de maintien (10), qui est formé à froid avec le manchon (3) et s'enfonce, au moins partiellement, dans le matériau du bout du tuyau en métal (4) en formant une liaison par emboîtement avec ledit tuyau en métal (4), **caractérisé en ce que** l'élément de maintien (10) est réalisé en forme d'anneau, fendu dans le sens de la longueur et est doté de saillies (12), qui s'étendent en direction du bout du tuyau en métal (4), s'enfoncent dans le matériau du bout de tuyau en métal (4), lors de la compression radiale du manchon (3), et sont réparties sur le pourtour de l'élément de maintien, et que, dans le voisinage de la rainure d'ancrage (8) pour la bague d'étanchéité (9), une rainure de réception annulaire, ouverte vers l'espace intérieur, est prévue pour au moins un l'élément de maintien (10).

2. Raccord serti selon la revendication 1, **caractérisé en ce que**, lors d'un faible retour élastique, la pointe de l'élément de maintien (10) demeure enfoncé dans le matériau du bout du tuyau en métal (4).

3. Raccord serti selon la revendication 1, **caractérisé en ce que** l'élément de maintien (10) annulaire est courbé en section transversale.

4. Raccord serti selon l'une des revendications 1 à 3, **caractérisé en ce que** l'élément de maintien est monté par emboîtement dans la rainure de réception (11) ou incorporé de manière élastique.

5. Raccord serti selon la revendication 1, **caractérisé en ce que** l'élément de maintien ou les éléments de maintien est / sont disposés entre la bague d'étanchéité (9) et le bout libre de l'élément de tuyauterie (1).

6. Raccord serti selon l'une des revendications précédentes, **caractérisé en ce que** le manchon (3) de l'élément de tuyauterie (1) est pourvu, sur la face extérieure, d'une rainure (21) périphérique, avec des cames, des nervures ou des pattes continues pour le blocage de l'outil de compression, de préférence d'une chaîne de compression de l'outil de compression.

7. Raccord serti selon l'une des revendications précédentes, **caractérisé en ce que** le manchon (3) de l'élément de tuyauterie (1) est rond ou approximativement rond après la compression et que les forces d'étanchéité et de maintien entre le manchon (3) et le bout du tuyau en métal (4) sont réparties régulièrement ou presque régulièrement sur le pourtour du tuyau en métal.

8. Raccord serti selon la revendication 2, **caractérisé en ce qu'**un élément de maintien en forme d'anneau (22) est équipé, sur la face orientée vers la bague d'étanchéité (9), de saillies (25), par exemple de dents, qui s'enfoncent dans le matériau du tuyau en métal, lors du formage à froid, et est doté, sur l'autre côté frontal, d'une surface conique (23), qui coopère avec une surface conique (24) de l'élément de tuyauterie.

9. Raccord serti selon l'une des revendications précédentes, **caractérisé en ce que** l'élément de maintien ou les éléments de maintien présente / présentent une dureté supérieure à celle du tuyau en métal.

10. Raccord serti selon la revendication 9, **caractérisé en ce que** l'élément de maintien ou les éléments de maintien sont fabriqués en acier inoxydable.

11. Raccord serti selon la revendication 1, **caractérisé en ce que** la bague d'étanchéité (9) est réalisée sous la forme d'un joint torique ou d'une pièce moulée adaptée.

12. Raccord serti selon la revendication 11, **caractérisé en ce que** la bague d'étanchéité (9) présente une section transversale relativement petite.
